(19) Europäisches Patentamt
European Patent Office
Office européen des brevets

(11) **EP 4 408 006 A1**

(12) **EUROPEAN PATENT APPLICATION**

(43) Date of publication:
**31.07.2024 Bulletin 2024/31**

(21) Application number: **23218606.4**

(22) Date of filing: **20.12.2023**

(51) International Patent Classification (IPC):
*H04N 23/63* (2023.01)    *H04N 23/61* (2023.01)
*B60R 1/00* (2022.01)    *H04N 23/60* (2023.01)
*H04N 25/53* (2023.01)    *H04N 23/69* (2023.01)
*H04N 23/695* (2023.01)    *H04N 23/73* (2023.01)
*H04N 23/80* (2023.01)    *G02B 13/00* (2006.01)

(52) Cooperative Patent Classification (CPC):
**H04N 23/61; B60R 1/27; G02B 13/0005;
H04N 23/632; H04N 23/633; H04N 23/665;
H04N 23/69; H04N 23/695; H04N 23/698;
H04N 23/73; H04N 23/80; B60R 2300/303;
B60R 2300/402; H04N 23/741**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.01.2023 JP 2023011341**

(71) Applicant: **CANON KABUSHIKI KAISHA
Tokyo 146-8501 (JP)**

(72) Inventor: **OKA, Nobuhiro
Tokyo,, 146-8501 (JP)**

(74) Representative: **TBK
Bavariaring 4-6
80336 München (DE)**

(54) **IMAGE PROCESSING SYSTEM, MOVABLE APPARATUS, IMAGE PROCESSING METHOD, AND STORAGE MEDIUM**

(57)    An image processing system has an image acquisition unit configured to acquire an image signal generated by an image capturing unit capturing an optical image, a selection unit configured to select a part of a viewing angle range of the image signal, and a control unit configured to perform at least one of exposure control and image quality adjustment regarding an image based on the image signal depending on image quality of the viewing angle range selected by the selection unit.

FIG. 5

**Description**

BACKGROUND OF THE INVENTION

Field of the Invention

The present invention relates to an image processing system, a movable apparatus, an image processing method, a storage medium, and the like.

Description of the Related Art

In recent years, there has been a desire to replace a rearview mirror mounted in a vehicle with electronic rearview mirrors. For example, Japanese Patent Laid-Open No. 2010-95202 discloses an electronic rearview mirror system which is constituted of an image capturing unit having an outside behind a vehicle as an image capturing range and a display unit provided inside the vehicle and through which a driver can check circumstances of the outside behind the vehicle by causing a display inside the vehicle to display an image captured by the image capturing unit.

On the other hand, there is a rear side checking system through which a driver can check blind spots on a side behind a vehicle at the time of rearward movement or the like of the vehicle. Japanese Patent Laid-Open No. 2004-345554 discloses a rear side checking system in which a camera is installed such that images of a side behind a vehicle are captured and a driver can check blind spots on the side behind the vehicle at the time of rearward movement or the like by displaying captured images inside the vehicle.

A camera serving as an image capturing unit capturing images for electronic rearview mirrors as described above is required to have a high resolution in order to allow a driver to check circumstances relatively distant behind the vehicle in greater detail. On the other hand, in a camera system for rear side checking, in order to avoid a collision at the time of rearward movement or the like, it is required to capture images of a wider range in order to check safety in a wider range including blind spots on a side behind and to the sides of a vehicle.

In addition, if an electronic rearview mirror system and a rear side checking system are mounted in a vehicle at the same time, an in-vehicle image processing system becomes complicated when a camera for the electronic rearview mirror system and a camera for the rear side checking system are mounted separately. For example, such a problem similarly occurs in an automatic driving system in which a plurality of cameras is disposed in order to capture images of a situation around a vehicle for automatic driving or the like.

SUMMARY OF THE INVENTION

According to an aspect of the present invention, an image processing system has at least one processor or circuit configured to function as: an image acquisition unit configured to acquire an image signal generated by an image capturing unit capturing an optical image; a selection unit configured to select a part of a viewing angle range of the image signal; and a control unit configured to perform at least one of exposure control and image quality adjustment regarding an image based on the image signal depending on an image quality of the viewing angle range selected by the selection unit.

Further features of the present invention will become apparent from the following description of embodiments with reference to the attached drawings.

BRIEF DESCRIPTION OF THE DRAWINGS

Fig. 1 is an explanatory view of a positional relationship between a vehicle and an image capturing unit in an image processing system of First Embodiment.
Figs. 2A and 2B are explanatory views of optical characteristics of the image capturing unit of a camera unit 11 of First Embodiment.
Fig. 3 is an explanatory functional block diagram of a constitution of the image processing system according to First Embodiment.
Fig. 4 is an explanatory view of a correspondence between a viewing angle of a camera unit 13 on a rear side, a high-resolution region, and a low-resolution region of First Embodiment.
Fig. 5 is an explanatory flowchart of an image processing method according to First Embodiment.
Fig. 6 is an explanatory functional block diagram of an example of a constitution of an image processing unit 31a according to First Embodiment.

Fig. 7 is an explanatory flowchart of an example of display processing according to First Embodiment.

Fig. 8A is an explanatory view of a display example of a display screen 501 of a first display unit 50 of First Embodiment, and Fig. 8B is an explanatory view of a display example of a display screen 511 of a second display unit 51 of First Embodiment.

Fig. 9 is an explanatory flowchart of operation of Second Embodiment of the present invention.

DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

[First Embodiment]

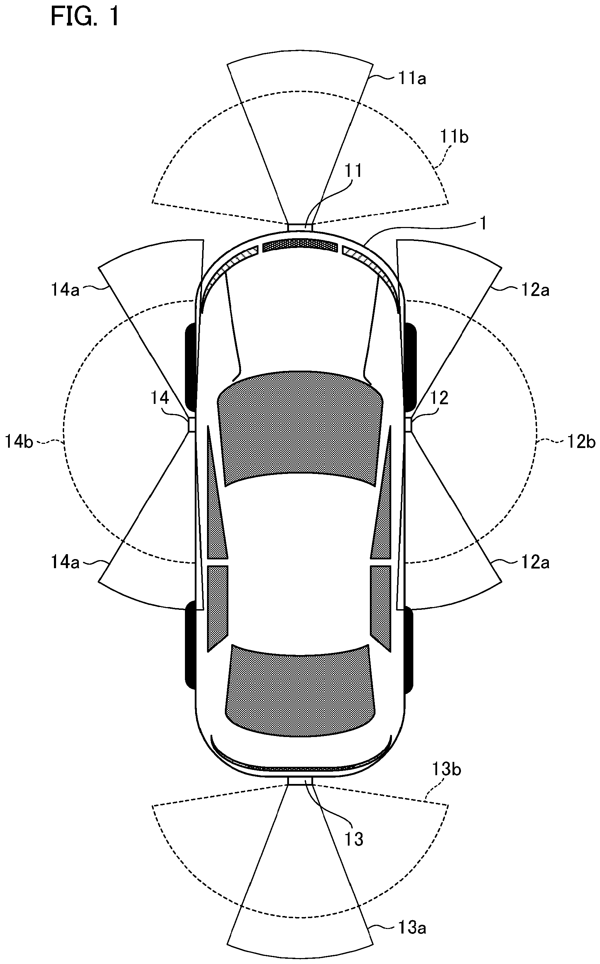

In First Embodiment, an improved method using a small number of cameras in which display for high-definition electronic rearview mirrors is compatible with display for checking surroundings of a vehicle, such as a wide range on a side behind a vehicle will be described. Fig. 1 is an explanatory view of a positional relationship between a vehicle and an image capturing unit in an image processing system of First Embodiment.

In First Embodiment, as shown in Fig. 1, camera units 11, 12, 13, and 14 are respectively installed on the front side, the right lateral side, the rear side, and the left lateral side of a vehicle 1 (automobile) that is a movable apparatus, for example. In First Embodiment, four camera units are provided, but the number of camera units is not limited to four and at least one or more camera units need only be provided.

As shown in Fig. 1, the camera units 11 to 14 are installed such that image capturing viewing angles thereof respectively have image capturing ranges on the side in front of, the side to the right of, the side to the left of, and the side behind the vehicle 1 (movable apparatus). The camera units 11 to 14 have substantially similar constitutions and each have an image capturing element for capturing an optical image and an optical system for forming an optical image on a light reception surface of the image capturing element.

For example, the camera units 11 and 13 are installed such that optical axes of the optical systems thereof become substantially horizontal, and the camera units 12 and 14 are installed such that optical axes of the optical systems thereof are directed slightly downward from the horizontal level.

In addition, each of the optical systems of the camera units 11 and 13 used in First Embodiment is configured to be able to obtain high-definition images at a viewing angle around the optical axis and to be able to obtain captured images with a low resolution at a peripheral viewing angle distant from the optical axis.

Meanwhile, each of the optical systems of the camera units 12 and 14 is configured to be able to obtain a low-resolution image at a viewing angle around the optical axis and to be able to obtain captured images with a high resolution at a peripheral viewing angle distant from the optical axis. The reference signs 11a to 14a indicate image capturing viewing angles capable of capturing images with a high resolution and a low distortion, and the reference signs 11b to 14b respectively indicate maximum ranges in which image capturing is possible of the camera units 11 to 14.

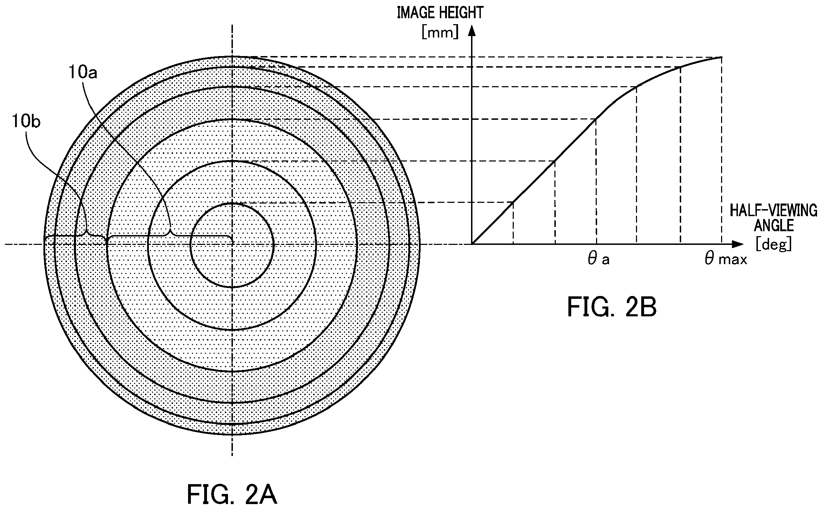

The optical systems of the camera units 11 and 13 according to First Embodiment will be described using Fig. 2. Characteristics of each of the optical systems of the camera units 11 and 13 may not be the same. However, in First Embodiment, it is assumed that the optical systems of the camera units 11 and 13 have substantially the same characteristics, and the optical system of the camera unit 11 will be described as an example.

Figs. 2A and 2B are explanatory views of optical characteristics of the image capturing unit of the camera unit 11 according to First Embodiment of the present invention. Fig. 2A is a view showing image heights y in a contour line shape at respective half-viewing angles on the light reception surface of the image capturing element in the optical system of the camera unit 11 according to First Embodiment.

Fig. 2B is a view expressing projective characteristics indicating relationships between the image heights y and half-viewing angles $\theta$ in the optical system of the camera unit 11 according to First Embodiment. In Fig. 2B, the horizontal axis indicates the half-viewing angle (an angle formed by the optical axis and an incident ray) $\theta$, and the vertical axis indicates the image height y on a sensor surface (on an image plane) of the camera unit 11.

As shown in Fig. 2B, the optical system of the camera unit 11 according to First Embodiment is configured to have a projective characteristic $y(\theta)$ differing between a region at an angle smaller than a predetermined half-viewing angle $\theta a$ and a region at an angle equal to or larger than the half-viewing angle $\theta a$. Therefore, when the amount of increase in image height y with respect to the half-viewing angle $\theta$ per unit is regarded as a resolution, the resolution differs depending on the region.

It can also be said that this local resolution is expressed by a differential value $dy(\theta)/d\theta$ of the projective characteristic $y(\theta)$ at the half-viewing angle $\theta$. That is, it can be said that the larger the inclination of the projective characteristic $y(\theta)$ in Fig. 2B, the higher the resolution. In addition, it can also be said that the larger the interval of the image heights y in the contour line shape at the respective half-viewing angles in Fig. 2A, the higher the resolution.

In First Embodiment, when the half-viewing angle θ is smaller than the predetermined half-viewing angle θa, a region near the center formed on the sensor surface will be referred to as a high-resolution region 10a, and an outer region having the half-viewing angle θ equal to or larger than the predetermined half-viewing angle θa will be referred to as a low-resolution region 10b. The high-resolution region 10a corresponds to the image capturing viewing angle 11a, and the total of the high-resolution region 10a and the low-resolution region 10b corresponds to the image capturing viewing angle 11b.

In First Embodiment, the circle at the boundary between the high-resolution region 10a and the low-resolution region 10b will be referred to as a resolution boundary, and a boundary image on a display screen corresponding to the resolution boundary will be referred to as a display resolution boundary or simply a boundary image. A boundary image (display resolution boundary) displayed in the display screen may not have a circular shape. It may have an elliptical shape or other shapes.

In First Embodiment, the high-resolution region 10a is a low-distortion region having a relatively small distortion, and the low-resolution region 10b is a high-distortion region having a relatively large distortion.

Therefore, in First Embodiment, the high-resolution region and the low-resolution region respectively correspond to the low-distortion region and the high-distortion region, and the high-resolution region and the low-resolution region may be respectively referred to as the low-distortion region and the high-distortion region. In addition, conversely, the low-distortion region and the high-distortion region may be respectively referred to as the high-resolution region and the low-resolution region.

The optical system of the camera unit 11 according to First Embodiment is constituted such that the projective characteristic y(θ) thereof becomes larger than f×θ in the high-resolution region (low-distortion region) 10a (f is a focal distance of the optical system of the camera unit 11). In addition, the projective characteristic y(θ) in the high-resolution region (low-distortion region) is set to differ from the projective characteristic in the low-resolution region (high-distortion region).

In addition, when θmax is the maximum half-viewing angle of the optical system of the camera unit 11, the ratio θa/θmax of θa to θmax is desirably equal to or larger than a predetermined lower limit value and is desirably set to 0.15 to 0.16 as the predetermined lower limit value, for example.

In addition, the ratio θa/θmax of θa to θmax is desirably equal to or smaller than a predetermined upper limit value and is desirably set to 0.25 to 0.35, for example. For example, if θmax is 90°, the predetermined lower limit value is 0.15, and the predetermined upper limit value is 0.35, it is desirable to decide θa as being within a range of 13.5° to 31.5°.

Moreover, the optical system of the camera unit 11 is constituted such that the projective characteristic y(θ) thereof satisfies the following Expression 1.

$$1 < f \times \sin\theta\max / y(\theta\max) \leq A \ ... \ \text{(Expression 1)}$$

The factor f indicates the focal distance of the optical system of the camera unit 11 described above, and the factor A indicates a predetermined constant. By setting the lower limit value to 1, the center resolution can be made higher than that of a fisheye lens using an orthographic projection method (y=f×sinθ) having the same maximum image height, and by setting the upper limit value to A, a favorable optical performance can be maintained while obtaining a viewing angle equivalent to that of a fisheye lens.

The predetermined constant A need only be determined in consideration of balance between the resolutions of the high-resolution region and the low-resolution region and is desirably set to 1.4 to 1.9.

By constituting the optical system as above, in the high-resolution region 10a, a high resolution can be obtained. Meanwhile, in the low-resolution region 10b, the amount of increase in image height y with respect to the half-viewing angle θ per unit can be reduced and images can be captured at a wider viewing angle. Therefore, in the high-resolution region 10a, a high resolution can be obtained while having an image capturing range with a wide viewing angle equivalent to that of a fisheye lens.

Moreover, in First Embodiment, the high-resolution region (low-distortion region) has a characteristic that approximates a central projection method (y=f×tanθ) or an equidistant projection method (y=f×θ) that is a projective characteristic of an optical system for normal image capturing. Therefore, fine displaying can be performed with a small optical distortion. In addition, it is possible to obtain a natural feeling of perspective when looking at surrounding vehicles such as preceding vehicles and following vehicles, and it is possible to curb degradation in image quality and obtain favorable visibility.

Since similar effects can be achieved if the projective characteristic y(θ) satisfies the conditions of Expression 1 described above, First Embodiment is not limited to the projective characteristics shown in Fig. 2. In First Embodiment, an optical system having the projective characteristic y(θ) satisfying the conditions of Expression 1 described above may be referred to as a center high-resolution lens.

In First Embodiment, for the camera units 12 and 14, instead of a center high-resolution lens shown in Fig. 2 and Expression 1, an optical system having the projective characteristic y(θ) satisfying the conditions of the following Expression 2 is used. In this optical system, the high-resolution region and the low-resolution region are approximately reversed compared to the foregoing center high-resolution lens.

That is, in the center high-resolution lens described above, a region near the center is the high-resolution region 10a, and an outer region having the half-viewing angle θ equal to or larger than the predetermined half-viewing angle θa is the low-resolution region 10b.

However, in the optical system satisfying the conditions of Expression 2, a region near the center becomes the low-resolution region 10b, and an outer region having the half-viewing angle θ equal to or larger than the predetermined half-viewing angle θa becomes the high-resolution region 10a. Such an optical system may be referred to as a peripheral high-resolution lens.

$$0.2 < 2 \times f \times \tan(\theta max/2)/y(\theta max) < B \ ... \ (\text{Expression 2})$$

In this manner, in at least one of the camera units, when the focal distance of the optical system is f, the half-viewing angle is θ, the image height in the image plane is y, the projective characteristic indicating the relationship between the image height y and the half-viewing angle θ is y(θ), and θmax is the maximum half-viewing angle of the optical system, the foregoing Expression 2 is satisfied. The factor B indicates a predetermined constant and need only be determined in consideration of balance between the resolutions of the high-resolution region and the low-resolution region. However, it is desirably set to approximately 0.92. More preferably, it is desirably set to approximately 0.8.

In First Embodiment, camera units each having a center high-resolution lens described above are used in order to capture images of the sides in front of and behind the movable apparatus. In contrast, camera units each having a peripheral high-resolution lens are used in order to capture images of lateral sides. This is because there is a high probability that subjects to be aware of when the movable apparatus is traveling will be seen on the sides in front of and behind the lateral sides of the movable apparatus so that it is desirable to capture images of regions displayed in electronic side mirrors with a high resolution and a low distortion.

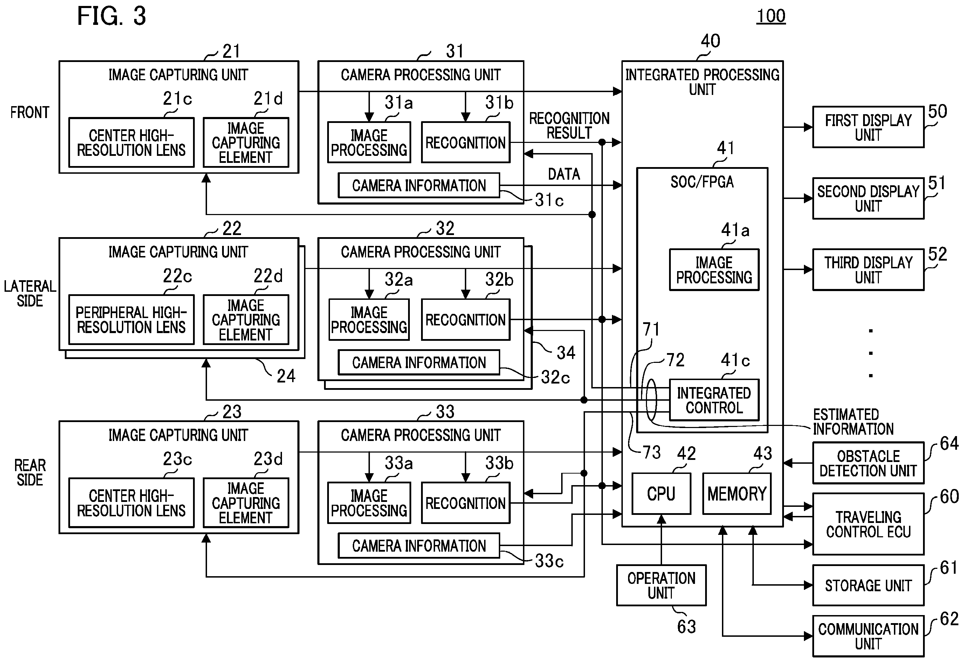

Next, a constitution of the image processing system according to First Embodiment will be described using Fig. 3. Fig. 3 is an explanatory functional block diagram of a constitution of the image processing system according to First Embodiment.

Some of the functional blocks shown in Fig. 3 are realized by causing a CPU or the like serving as a computer included in the image processing system to execute a computer program stored in a memory serving as a storage medium. However, some or all of them may be realized by hardware. A dedicated circuit (ASIC), a processor (a reconfigurable processor, DSP), or the like may be used as hardware.

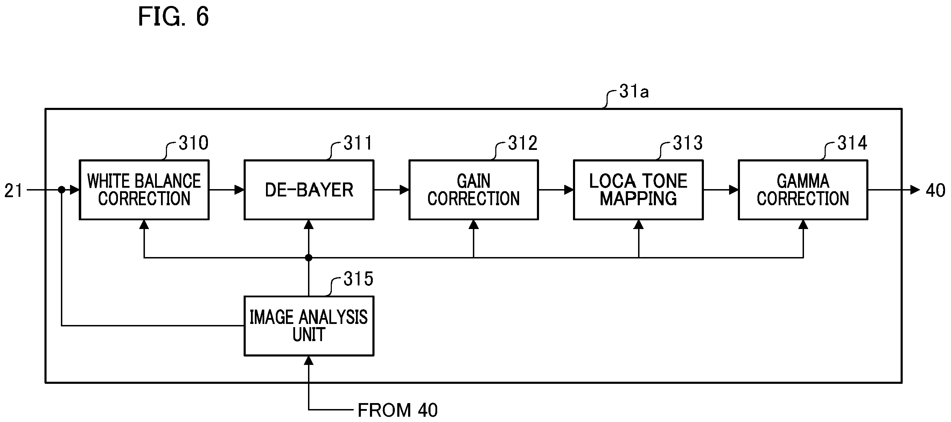

In addition, the functional blocks shown in Fig. 3 may not be built into the same casing and may be respectively constituted by separate devices connected to each other through signal paths. The foregoing description related to Fig. 3 similarly applies to Fig. 6 as well.

In Fig. 3, an image processing system 100 is mounted in the vehicle 1 (movable apparatus), and image capturing units 21 to 24 and camera processing units 31 to 34 are respectively disposed inside the casings of the camera units 11 to 14.

The image capturing units 21 and 23 respectively have center high-resolution lenses 21c and 23c and image capturing elements 21d and 23d serving as image capturing units such as CMOS image sensors or CCD image sensors, for example. The image capturing units 22 and 24 respectively have peripheral high-resolution lenses 22c and 24c and image capturing elements 22d and 24d such as CMOS image sensors or CCD image sensors, for example.

Here, each of the image capturing units 21 to 24 functions as an image acquisition unit, and each of the image acquisition units executes an image acquisition step of acquiring an image signal generated by the image capturing unit capturing an optical image having a low-distortion region and a high-distortion region. In addition, in First Embodiment, a plurality of image acquisition units disposed at different positions are provided.

The center high-resolution lenses 21c and 23c serving as optical systems are constituted of one or more optical lenses, have the projective characteristic y(θ) satisfying the conditions of Expression 1, and respectively form optical images having a low-distortion region and a high-distortion region on the light reception surfaces of the image capturing elements 21d and 23d.

The peripheral high-resolution lenses 22c and 24c serving as optical system are constituted of one or more optical lenses, have the projective characteristic y(θ) satisfying the conditions of Expression 2, and respectively form optical images having a low-distortion region and a high-distortion region on the light reception surfaces of the image capturing elements 22d and 24d.

The image capturing elements 21d to 24d perform photoelectric conversion of an optical image and output an image-capturing signal. On the light reception surfaces of the image capturing elements 21d to 24d, for example, RGB color filters are arrayed in each pixel. The array of RGB is a Bayer array, for example.

Therefore, in accordance with the Bayer array, for example, the image capturing elements are configured to sequentially output signals of R, G, R, and G from a predetermined row and sequentially output signals of G, B, G, and B from an adjacent row.

The reference signs 31 to 34 indicate camera processing units, are accommodated together with the image capturing units 21 to 24 in the same casings of the camera units 11 to 14, and respectively process image-capturing signals output from the image capturing units 21 to 24. In Fig. 3, details and wirings thereof of the image capturing unit 24 and the camera processing unit 34 will be omitted for the sake of convenience.

The camera processing units 31 to 34 respectively have image processing units 31a to 34a, recognition units 31b to 34b, and camera information units 31c to 34c. The image processing units 31a to 34a perform image processing of respective image-capturing signals output from the image capturing units 21 to 24. Some or all of the functions of the camera processing unit 31 may be performed by signal processing units stacked inside the image capturing elements 21d to 24d.

Specifically, the image processing units 31a to 34a respectively perform white balance adjustment and Debayer processing of image data input from the image capturing units 21 to 24 in accordance with a Bayer array and convert it into image data in an RGB raster form. Moreover, various kinds of correction processing such as gain adjustment, local tone mapping, gamma processing, color matrix processing, and reversible compression processing are performed.

Each of the camera information units 31c to 34c (characteristic information retainment units) retains camera information of the camera units 11 to 14 in the memory in advance. The camera information units can also temporarily retain information from various kinds of sensors and the like provided inside the camera units 11 to 14.

For example, the camera information includes characteristic information (resolution boundary information and the like) of optical images formed by the center high-resolution lenses 21c and 23c and the peripheral high-resolution lenses 22c and 24c. In addition, the camera information includes the number of pixels in the image capturing elements 21d to 24d, information of attachment position coordinates and postures (pitch, roll, yaw, and the like) in vehicle coordinates of the camera units, and image capturing directions. The camera information may include information such as gamma characteristics, sensitivity characteristics, and frame rates.

Moreover, the camera information may include information related to an image processing method and an image format when image signals are generated in the image processing units 31a to 34a. Since the attachment position of each camera unit with respect to a vehicle is often fixed, the attachment position coordinates may be stored in the memory inside the camera information unit in advance.

In addition, the posture coordinates of the camera unit are relative coordinates with respect to the vehicle 1 and may be acquired from an encoder or the like (not shown) provided in the camera unit. Alternatively, they may be acquired using a three-dimensional acceleration sensor or the like.

In addition, information related to the image capturing direction may be acquired using a geomagnetic sensor, for example. Since the resolution boundary information of the cameras is determined depending on lens design, it is assumed that the resolution boundary information is stored in the memory inside the camera information unit in advance.

The camera information is unique information of each of the image capturing units 21 to 24, and pieces of the information differ from each other, are transmitted to an integrated processing unit 40, and are referred to when image processing or the like is performed in the integrated processing unit 40. Here, the camera information units 31c to 34c function as characteristic information retention units retaining characteristic information related to characteristics of optical images.

CPUs serving as computers or memories serving as storage mediums storing computer programs are built into the camera processing units 31 to 34. In addition, the CPUs are configured to control each part inside the camera processing units 31 to 34 by executing the computer programs inside the memories.

In First Embodiment, for example, hardware such as a dedicated circuit (ASIC) or a processor (a reconfigurable processor, DSP) is used as the image processing units 31a to 34a and the recognition units 31b to 34b.

In addition, some or all of the functional blocks inside the camera processing units 31 to 34 may be realized by causing the CPUs to execute the computer programs stored in the memories. However, in that case, it is desirable to increase processing speeds of the CPUs.

The reference sign 40 indicates an integrated processing unit, which has a system-on-chip (SOC)/field programable gate array (FPGA) 41, a CPU 42 serving as a computer, and a memory 43 serving as a storage medium.

The CPU 42 functions as a control unit performing various kinds of control of the image processing system 100 in its entirety by executing the computer program stored in the memory 43. In First Embodiment, the integrated processing unit 40 is accommodated in a casing separately from the camera unit.

The SOC/FPGA 41 has an image processing unit 41a and an integrated control unit 41c. The image processing unit 41a acquires each of the image signals from the camera processing units 31 to 34 and acquires the camera information of each of the camera units 11 to 14 by the camera information units 31c to 34c.

As described above, the camera information includes optical characteristics of the center high-resolution lenses 21c and 23c and the peripheral high-resolution lenses 22c and 24c, the number of pixels of the image capturing elements 21d to 24d, photoelectric conversion characteristics, gamma characteristics, sensitivity characteristics, and format information of an image signal. In addition, the camera information includes attachment coordinates in the vehicle coordinates of the camera unit, posture information, and the like.

The image processing unit 41a performs resolution conversion with respect to each of the image signals from the camera processing units 31 to 34 on the basis of the camera information and performs distortion correction with respect to an image signal obtained from the low-resolution region 10b of each of the image capturing units 21 to 24.

That is, it performs distortion correction with respect to an image signal in a distortion correction region on the basis of the characteristics of the optical image and generates a composite image by composing an image signal subjected to distortion correction and an image signal in a non-distortion correction region not subjected to distortion correction. That is, the image processing unit 41a also functions as a display signal generation unit, which performs distortion correction and the like and performs a display signal generation step of generating a composite image. In First Embodiment, the distortion correction region can be set by a user or automatically.

In First Embodiment, since an image signal obtained from the high-resolution region 10a has almost no distortion, the image processing unit 41a does not perform distortion correction. However, the image processing unit 41a may also perform simple distortion correction with respect to an image signal obtained from the high-resolution region 10a. In addition, the image processing unit 41a appropriately performs irreversible compression processing or the like with respect to each of the image signals sent from the camera processing units 31 to 34.

In addition, the image processing unit 41a forms a whole image from those of the image capturing units 21 to 24 by composing an image signal in the low-resolution region 10b and an image signal in the high-resolution region 10a of each of the image capturing units 21 to 24 subjected to distortion correction such that they are smoothly connected to each other.

If distortion correction is performed with respect to both an image signal in the low-resolution region 10b and an image signal obtained from the high-resolution region 10a, an image signal obtained by each of the image processing units 31a to 34a may be subjected to distortion correction as it stands.

In First Embodiment, the image processing unit 41a can form a panoramic composite image by composing images from the camera units 12 to 14 serving as a plurality of image capturing units such that they are connected to each other.

In that case, a connected image of the plurality of image capturing units is set to have regions in which at least parts of their respective image capturing viewing angles overlap each other by a predetermined amount or more. That is, the camera units 12 and 13 are disposed such that the image capturing ranges thereof overlap each other. In addition, the camera units 13 and 14 are disposed such that the image capturing ranges thereof overlap each other.

In addition, the integrated control unit 41c forms a display signal for displaying a desired image of a whole image from those of the image capturing units 21 to 24 and a panoramic composite image in a first display unit 50, a second display unit 51, a third display unit 52, or the like.

At this time, a frame for highlight-displaying a recognized object, information related to the kind, the size, the position, the velocity, and the like of an object, and CG for a warning or the like are generated. Moreover, CG of a boundary image for displaying a boundary is generated on the basis of the characteristic information of the optical system, such as the display resolution boundary information acquired from the camera information units 31c to 34c.

In addition, display processing or the like for superimposing the CG or letters on an image is performed. The integrated control unit 41c functions as a display signal generation unit generating a composite image by composing image signals acquired from the plurality of image acquisition units. In addition, the first display unit 50, the second display unit 51, the third display unit 52, and the like function as display units and display an image signal or an integrated image recognition result.

For example, the first display unit 50 is installed near the center of the upper portion in the vehicle width direction in front of the driver's seat of the vehicle 1 while having the display screen toward the rear side of the vehicle and functions as an electronic rearview mirror. It may be configured to be able to be used as a mirror using a half mirror or the like when it is not used as a display. In addition, it is configured to include a touch panel or an operation button such that an instruction from a user can be acquired and output to the integrated control unit 41c.

For example, the second display unit 51 is installed around an operation panel near the center in the vehicle width direction in front of the driver's seat of the vehicle 1. A navigation system (not shown), an audio system, and the like are mounted in the vehicle 1 (movable apparatus).

Further, for example, the second display unit can also display a navigation system, an audio system, various kinds of control signals from a traveling control unit (ECU) 60, and the like. In addition, in the second display unit 51, an image for checking the rear side during rearward movement is displayed and is used as a back monitor. In addition, it is configured to include a touch panel or an operation button such that an instruction from a user can be acquired.

For example, the second display unit 51 may be a display unit of a tablet terminal, which can also perform displaying by being connected to the integrated processing unit 40 by wire and can also receive an image by radio via a communication unit 62 and perform displaying.

For example, the third display unit 52 may be a display unit functioning as an electronic side mirror. In First Embodiment, the third display unit 52 is provided separately from the first display unit 50, but displaying similar to that of the third display unit 52 may be performed in parts at the left and right ends of the first display unit 50.

The third display unit 52 is configured to serve as the electronic side mirror on the left side and the electronic side mirror on the right side. The electronic side mirror on the right side is disposed on the inward side of the right door, for example, and the electronic side mirror on the left side is disposed on the inward side of the left door, for example. In addition, the third display unit 52 is also configured to include a touch panel or an operation button such that an instruction from a user can be acquired.

In First Embodiment, in a state in which a power source of the movable apparatus is turned on, it is assumed that the third display unit 52 is in a displaying state at all times. In addition, regarding the display viewing angle in the third display unit 52, all the image capturing viewing angles of the respective camera units 12 and 14 may be displayed.

Liquid crystal displays, organic EL displays, or the like may be used as display panels of the first display unit 50, the second display unit 51, and the third display unit 52. The number of display units is not limited to three.

In addition, the integrated control unit 41c performs communication with the traveling control unit (ECU) 60 and the like via an internally provided communication unit (not shown) using a protocol such as CAN, FlexRay, or Ethernet. Accordingly, display processing of appropriately changing displaying information on the basis of a vehicle control signal received from the traveling control unit (ECU) 60 and the like. That is, for example, the range of an image displayed in the display unit, and the like are changed in accordance with the movement state of the vehicle acquired based on the vehicle control signal.

The traveling control unit (ECU) 60 is a unit which is mounted in the vehicle 1 and into which a computer or a memory for comprehensively performing drive control, direction control, and the like of the vehicle 1 is built. For example, information and the like related to traveling (movement state) of the vehicle, such as a traveling velocity, a traveling direction, states of a shift lever, a shift gear, and blinkers, and a direction of the vehicle by a geomagnetic sensor or the like are input to the integrated processing unit 40 from the traveling control unit (ECU) 60 as a vehicle control signal.

Meanwhile, the integrated control unit 41c transmits information such as the kind, the position, the movement direction, and the movement velocity of a predetermined object (an obstacle or the like) recognized by the recognition units 31b to 34b or the like to the traveling control unit (ECU) 60. An obstacle detection unit 64 is also configured to detect an obstacle.

Further, if an obstacle is detected by the recognition units 31b to 34b or the obstacle detection unit 64, the traveling control unit (ECU) 60 performs control necessary to avoid an obstacle, such as stopping, driving, changing of the traveling direction, and the like of the vehicle. Here, the traveling control unit (ECU) 60 functions as a movement control unit controlling movement of the vehicle (movable apparatus) on the basis of an image recognition result or the like.

Some or all of the functional blocks included in the integrated processing unit 40 and the like may be realized by hardware or may be realized by causing the CPU 42 to execute the computer program stored in the memory 43.

A dedicated circuit (ASIC), a processor (a reconfigurable processor, DSP), or the like may be used as hardware. A part or the entirety of the image processing performed by the image processing units 31a to 34a may be performed by the image processing unit 41a of the integrated processing unit 40.

In First Embodiment, the integrated processing unit 40 is mounted in the vehicle 1 (movable apparatus), but a part of the processing of the image processing unit 41a and the integrated control unit 41c of the integrated processing unit 40 may be performed in an external server or the like via a network, for example.

In that case, the image capturing units 21 to 24 serving as image acquisition units are mounted in the vehicle 1 (movable apparatus). However, for example, some of the functions of the camera processing units 31 to 34 and the integrated processing unit 40 can be processed in an external server or the like. In addition, the traveling control unit (ECU) 60 can also have some or all of the functions of the integrated processing unit 40.

The reference sign 61 indicates a storage unit, which stores a whole image from those of the image capturing units 21 to 24 generated by the integrated processing unit 40 and a panoramic composite image. Moreover, a predetermined frame indicating a recognized object, letters, CG of a warning or the like, and an image in which CG is superimposed and displayed in the first display unit 50, the second display unit 51, or the like are stored together with the time, GPS information, and the like.

The integrated processing unit 40 can also reproduce past information stored in the storage unit 61 and display it in the first display unit 50 or the second display unit 51.

The reference sign 62 indicates a communication unit for communication with an external server or the like via a network and can transmit information before being stored in the storage unit 61 or past information stored in the storage unit 61 to an external server or the like and save it in an external server or the like.

In addition, as described above, an image can be transmitted to an external tablet terminal or the like, and an image can also be displayed in the second display unit 51 that is a display unit of the tablet terminal. In addition, congestion information and various kinds of information can be acquired from an external server or the like and can also be displayed in the first display unit 50, the second display unit 51, or the third display unit 52 via the integrated processing unit 40. In First Embodiment, the plurality of display units can respectively display the images at the respective viewing angles at the same time.

The reference sign 63 indicates an operation unit for inputting various instructions to the image processing system by an operation of a user. The operation unit includes a UI such as a touch panel or an operation button for receiving selection of a user, for example. The reference sign 64 indicates an obstacle detection unit for detecting an obstacle present around the movable apparatus using laser light or the like, for example.

In First Embodiment, the CPU 42 serving as a control unit can perform control of image processing in each of the image processing units 31a, 32a, 33a, and 34a and exposure control (aperture control, charge accumulation time control, and the like) in the image capturing units 21 to 24 through signal lines 71 to 74. The signal line 74 is not shown in Fig. 3.

In addition, depending on the viewing angle displayed in the display unit, white balance, a gain, y, local tone mapping, and the like within the viewing angle can be optimized, and the luminance level of an image within the viewing angle can be made optimum by exposure control during image capturing. Details will be described below.

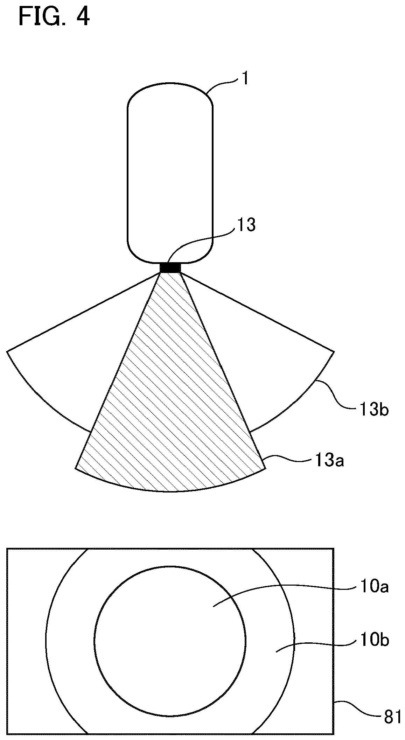

Fig. 4 is an explanatory view of a correspondence between a viewing angle of the camera unit 13 on the rear side, the high-resolution region, and the low-resolution region of First Embodiment. As shown in Fig. 4, an image at the image capturing viewing angle 13a of the camera unit 13 on the rear side is formed in the high-resolution region (low-distortion region) 10a on a light reception surface 81 of the image capturing element. In addition, an image of the surrounding part at the image capturing viewing angle 13b is formed in the low-resolution region (high-distortion region) 10b on the light reception surface 81 of the image capturing element.

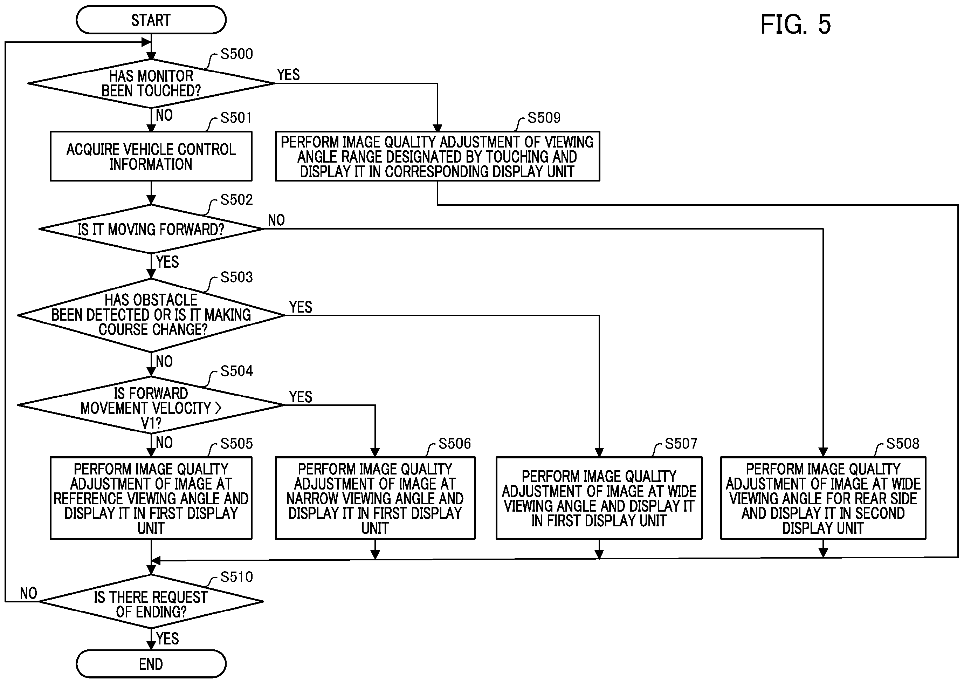

Next, Fig. 5 is an explanatory flowchart of an image processing method according to First Embodiment. The flow of Fig. 5 is processed in frame units, for example, by the CPU 42 of the integrated processing unit 40 executing the computer program inside the memory 43 in response to a signal indicating the traveling state from the traveling control unit (ECU) 60.

In Step S500 of Fig. 5, it is discriminated whether or not a user has touched at least one of the first display unit 50 to the third display unit 52 with a finger. In the case of Yes, the processing proceeds to Step S509. Here, it is discriminated which display unit is mainly used by touching the display unit, but the present invention is not limited to touch. For example, the display unit may be selected using a menu button.

In addition, a viewing angle range may be selected based on a touch range or the like, or a viewing angle range may be selected using a cursor or the like. In Step S509, an image of the viewing angle range designated by touching is displayed in the touched display unit. If touched, the image quality of the image of the viewing angle range is adjusted.

That is, as described above, the integrated control unit 41c performs control of image processing in each of the image processing units 31a, 32a, 33a, and 34a and exposure control (aperture control, charge accumulation time control, and the like) in the image capturing units 21 to 24 through the signal lines 71 to 74.

In First Embodiment, both image processing control and exposure control are performed, but at least one of image processing control and exposure control may be performed. In addition, for example, image processing control may include HDR control for widening a dynamic range by composing images captured at different charge accumulation times.

That is, depending on the viewing angle displayed in the display unit, white balance, a gain, y, local tone mapping, and the like within the viewing angle are optimized, and the luminance level of an image within the viewing angle is made optimum by exposure control during image capturing.

Fig. 6 is an explanatory functional block diagram of an example of a constitution of the image processing unit 31a according to First Embodiment. As shown in Fig. 6, the image processing unit 31a has a white balance correction unit 310, a Debayer processing unit 311, a gain correction unit 312, a local tone mapping unit 313, a gamma correction unit 314, and an image analysis unit 315.

The white balance correction unit 310 corrects the color of an image signal in accordance with the color temperature of a subject. The Debayer processing unit 311 synchronizes R, G, and B color signals obtained from the image capturing elements and divides them into color signals of an R plane, a G plane, and a B plane. For example, the gain correction unit 312 adjusts the gain such that, for example, the average value of the luminance levels of the image of the selected viewing angle range becomes a predetermined optimal value.

The local tone mapping unit 313 performs locally different luminance conversion in order to increase the reproducibility of a scene for the image of the selected viewing angle range. For example, the gamma correction unit 314 optimizes a gamma curve in accordance with a histogram of the luminance.

The image analysis unit 315 acquires information related to the selected viewing angle range (a predetermined position and a predetermined size) from the integrated control unit 41c and analyzes the image of the viewing angle range.

For example, the color temperature, the average luminance value, the luminance histogram, and the like of the image of the viewing angle range are analyzed, the white balance is corrected by the white balance correction unit 310 on the basis of the analysis result, and the gain is corrected by the gain correction unit 312. In addition, the gamma curve is corrected by the gamma correction unit 314 on the basis of the analysis result of the histogram of the luminance.

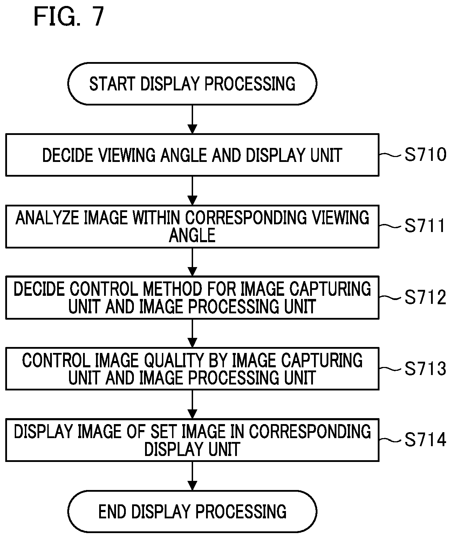

Fig. 7 is an explanatory flowchart of an example of processing of Step S509. The flow of Fig. 7 is processed in frame units, for example, by the CPU 42 of the integrated processing unit 40 executing the computer program inside the memory 43 in response to a signal indicating the traveling state from the traveling control unit (ECU) 60.

Specifically, for example, it is assumed that a user has touched the first display unit 50 (electronic rearview mirror) with a finger. In that case, it is assumed that an image of the side in front is displayed in the first display unit 50 (electronic rearview mirror) at this time. Further, in this image, it is assumed that a predetermined viewing angle range (a predetermined position and a predetermined size) is selected by a touch operation.

Consequently, in Step S710 of Fig. 7, the integrated control unit 41c decides the viewing angle range (a predetermined position and a predetermined size) selected in the first display unit 50 as a control target. Next, in Step S711, the integrated control unit 41c transmits the fact that the viewing angle range (a predetermined position and a predetermined size) selected in the first display unit 50 has been decided as a control target to each of the image processing unit 31a and the image capturing unit 21 via the signal line 71.

The image analysis unit 315 analyzes an image in the selected viewing angle range (a predetermined position and a predetermined size) in Step S711 and decides a control method in the image capturing unit and the image processing unit on the basis of the analysis result in Step S712.

That is, adjustment of at least one of the charge accumulation time of the image capturing element of the image capturing unit 21 and the gain in the image processing unit 31a is decided such that, for example, the luminance level of the image of the selected viewing angle range becomes appropriate, for example. Alternatively, control of white balance correction, gamma correction, or the like is decided on the basis of the analysis result.

Next, in Step S713, the control decided in Step S712 is executed. For example, by correcting the charge accumulation time and the gain of the image capturing element, for example, even if halation has occurred in the image of the selected viewing angle range due to reflection of sun light or the like, an image in an appropriate luminance level can be obtained.

In addition, the white balance, gamma, or the like is properly corrected. Next, in Step S714, the image of the viewing angle range after correction is displayed in the display unit. After the foregoing processing is executed in Step S509, the processing proceeds to Step S510.

When an image subjected to image quality adjustment in the first display unit 50 is displayed in Step S509, for example, an image at the maximum viewing angle, for example, captured by the camera unit 11, for example, may be displayed in the second display unit 51 or the like. In that case, the image quality of the image displayed in the second display unit 51 or the like may be displayed with the image quality matching the image quality in the first display unit 50.

That is, regarding display in other display units, even if the viewing angle differs, the state of exposure adjustment or image quality adjustment may be the same state as the first display unit. The same also applies to Step S505, Step S506, Step S507, and Step S508 described below.

However, at this time, the image quality of the image displayed in other display units may be inferior to the image quality in the first display unit 50. This is because the optimal value for exposure or the like differs due to the difference in viewing angle between the image displayed in other display units and the image displayed in the first display unit 50.

If No in Step S500, the processing proceeds to Step S501. In Step S501, vehicle control information is acquired from the traveling control unit (ECU) 60. As described above, for example, the vehicle control information includes information related to traveling of the vehicle, such as the traveling velocity, the traveling direction, the shift lever, the shift gear, and the blinkers.

In Step S502, it is discriminated whether or not the vehicle is traveling and in a forward movement state on the basis of the vehicle control information. If it is moving forward, in Step S503, it is discriminated whether or not an obstacle has been detected or the vehicle is making a course change. If No, in Step S504, it is discriminated whether or not the forward movement velocity is higher than a predetermined threshold V1 (for example, 60 km/h).

If No in Step S504, images at a predetermined reference viewing angle that has been set in advance by a user are subjected to image quality adjustment and displayed in the first display unit in Step S505. That is, images 82C, 82B, 82L, and 82R at a predetermined reference viewing angle are displayed in the first display unit 50 serving as an electronic rearview mirror, for example. Thereafter, the processing proceeds to Step S510.

It is assumed that the foregoing image quality adjustment is similar to the image quality adjustment in Step S509. That is, it includes exposure adjustment (adjustment of the aperture, the charge accumulation time, and the like) of the image capturing element, image quality adjustment through image processing, and the like.

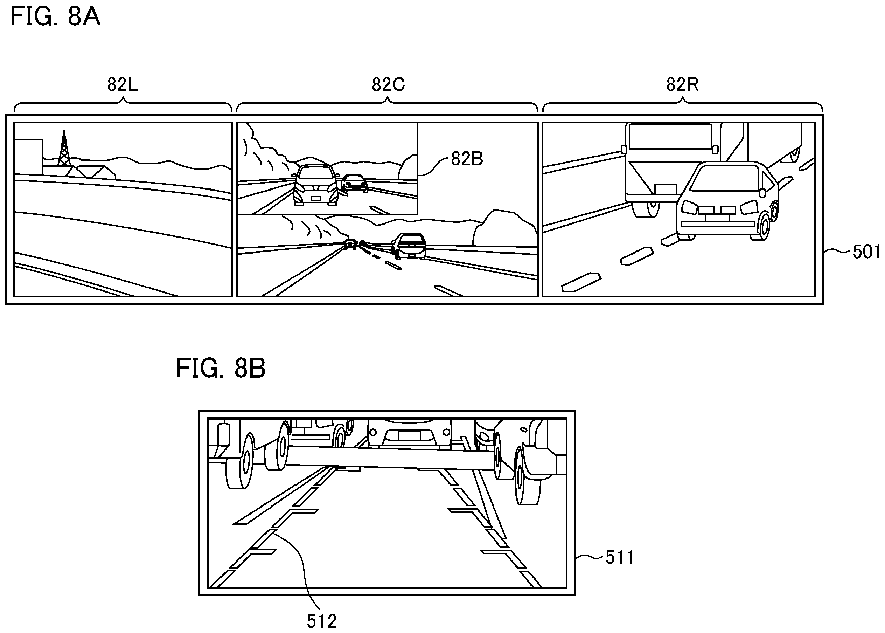

Fig. 8A is an explanatory view of a display example of a display screen 501 of the first display unit 50 of First Embodiment, and Fig. 8B is an explanatory view of a display example of a display screen 511 of the second display unit 51 of First Embodiment. In Fig. 8A, the reference sign 82L indicates a part of an image from the camera unit 14 on the left lateral side, the reference sign 82C indicates an image at the reference viewing angle from the camera unit 11 in the front, the reference sign 82R indicates a part of an image from the camera unit 12 on the right lateral side.

As shown in Fig. 8A, if it is discriminated that the forward movement velocity is V1 (for example, speed of 60 km/h) or lower in Step S504, the processing proceeds to Step S505, and the image 82L, the image 82C at the reference viewing angle, and the image 82R are displayed side by side in the display screen 501 of the first display unit 50. The image 82L and the image 82R are also displayed in the third display unit 52 serving as the electronic side mirror on the left and the electronic side mirror on the right if the power source of the vehicle is turned on.

In Fig. 8A, the image 82B is an image of the camera unit 13 for the rear side at the reference viewing angle for the rear side set in advance and is displayed in a picture-in-picture manner, for example, in the display screen 501 of the first display unit 50.

Fig. 8A shows an example in which the front side image is the main and the rear side image is displayed in a picture-in-picture manner. However, in a normal traveling state, the rear side image is the main and the front side image is displayed in a picture-in-picture manner. At this time, the front side image may not be displayed.

In First Embodiment, if it is discriminated that the forward movement velocity is V1 or lower in Step S504, the images 82C and 82B at the reference viewing angle from the camera units 11 and 13 are respectively displayed.

Meanwhile, if it is discriminated that the forward movement velocity is higher than V1 in Step S504, the processing proceeds to Step S506. Further, an image of a display region at the upper side viewing angle having a narrower lateral width than the images of 82B and 82C in Fig. 8 is subjected to image quality adjustment and displayed in the first display unit serving as an electronic rearview mirror. Thereafter, the processing proceeds to Step S510.

It is assumed that the foregoing image quality adjustment is similar to the image quality adjustment in Step S509. That is, it includes exposure adjustment of the image capturing element, image quality adjustment through image processing, and the like. It is assumed that the viewing angle of the images of the sides in front of and behind the vehicle in Step S506 is a viewing angle that is narrower in the vertical and lateral directions than the reference viewing angle described above.

This is because the visual field of a driver in the vertical and lateral directions becomes narrow if the forward movement velocity is high.

In this manner, since the vision becomes narrower if the forward movement velocity is higher than V1 (for example, 60 km), it is easy to quickly visually recognize necessary information when an image is displayed while being narrowed in the vertical and lateral directions.

In addition, if it judged that an obstacle has been detected or the vehicle is making a course change in Step S503 of Fig. 5, the processing proceeds to Step S507, image quality adjustment is performed, and at least the front side image at a viewing angle widened in the lateral direction and the downward direction is displayed.

It is assumed that the foregoing image quality adjustment is similar to the image quality adjustment in Step S509. That is, it includes exposure adjustment of the image capturing element, image quality adjustment through image processing, and the like. Here, it is assumed that the display region in Step S507 has a wider width in the lateral direction than the display region at the reference viewing angle and is widened in the downward direction.

In this manner, in First Embodiment, if an obstacle has been detected or the vehicle is making a course change, at least the front side image at a viewing angle widened in the lateral direction is displayed, and therefore it becomes easier to visually recognize safety of the surroundings. Furthermore, since an image having a viewing angle widened in the downward direction is displayed, it becomes easier to visually recognize an obstacle on the road. After Step S507, the processing proceeds to Step S510.

In Step S502 of Fig. 5, if it is judged that the vehicle is traveling but is not moving forward, the processing proceeds to Step S508. In Step S508, an image for rearward movement at a viewing angle lower and wider in the lateral direction than the reference viewing angle is subjected to image quality adjustment. For example, as in Fig. 8B, it is displayed in the display screen 511 of the second display unit 51 for the back monitor. Thereafter, the processing proceeds to Step S510.

It is assumed that the image quality adjustment in Step S508 is similar to the image quality adjustment in Step S509. That is, it includes exposure adjustment of the image capturing element, image quality adjustment through image processing, and the like.

The reason why the viewing angle is widened in the downward direction and the lateral direction in Step S508 is to make it easier to find an obstacle in a wide range during rearward movement.

Fig. 8B shows an example of a screen displayed in the display screen 511 of the second display unit 51 when the vehicle 1 moves rearward. For example, a guide display 512 for guiding the vehicle 1 into a parking space is displayed in a superimposed manner.

After Step S508, the processing proceeds to Step S510, and it is discriminated whether or not there is a request of ending from a user. If Yes, the flow of Fig. 5 ends, and if No, the processing returns to Step S500.

In Step S510, if the rearward movement velocity is higher than V2, the viewing angle is wider in the vertical and lateral directions than the reference viewing angle for the rear side of the display region. This is because the rear side is displayed in a wider manner to make it easier to visually recognize an obstacle if the rearward movement velocity is higher than V2.

Here, Steps S500 to S504 function as a selection step (selection unit) of selecting a part of the viewing angle range of an image signal. In addition, Steps S505 to S509 function as a control step (control unit) performing at least one of exposure control and image quality adjustment regarding an image based on the image signal depending on the image quality of the viewing angle range selected through the selection step.

In this manner, in First Embodiment, depending on the movement state of the vehicle 1 (movable apparatus), the image quality of the screen that is mainly viewed by a driver is favorably controlled and visibility is improved. In addition, since the display region can be appropriately changed, the performance of the image processing system using an optical system such as a center high-resolution lens or a peripheral high-resolution lens can be further derived.

In addition, if the display region is switched, exposure adjustment or image quality adjustment is performed with respect to the viewing angle range (display region), and the image processing or the exposure control is optimized. Therefore, it is possible to further prevent degradation in visibility caused by halation or black defects.

In addition, as described above, if display at a different viewing angle is performed in another display unit at the same time using an image from the same image capturing unit, image quality correction may be performed to curb deterioration in display image quality of another display unit by optimizing the exposure of a particular display unit as described above.

In addition, in First Embodiment and Second Embodiment, the high-resolution regions (low-distortion region) of the camera units capturing images of the front side and the rear side are configured to be projective characteristic that approximates the central projection method ($y=f\times\tan\theta$) or the equidistant projection method ($y=f\times\theta$) of an optical system for normal image capturing.

In addition, as shown in Fig. 8, the first display unit 50 serving as an electronic rearview mirror displays the image 82C captured by the camera unit 11 via the center high-resolution lens 21c. In addition, the first display unit 50 displays the image 82B captured by the camera unit 13 via the center high-resolution lens 23c. In addition, the second display unit 51 displays an image captured by the camera unit 13 during rearward movement.

Therefore, for example, an image of the high-resolution region (low-distortion region) 10a displayed in the first display unit 50 or the second display unit 51 has a higher resolution than the low-resolution region (high-distortion region) 10b, and therefore far sides in front of and behind the vehicle 1 can be displayed more finely.

Meanwhile, since the characteristics of the optical systems of the camera units on the side surfaces are caused to be characteristics opposite to the optical characteristics of the camera units on the front side and the rear side, it is easier to visually recognize movable apparatuses and the like in the forward and rearward directions on the lateral sides of the movable apparatus through the electronic side mirror.

[Second Embodiment]

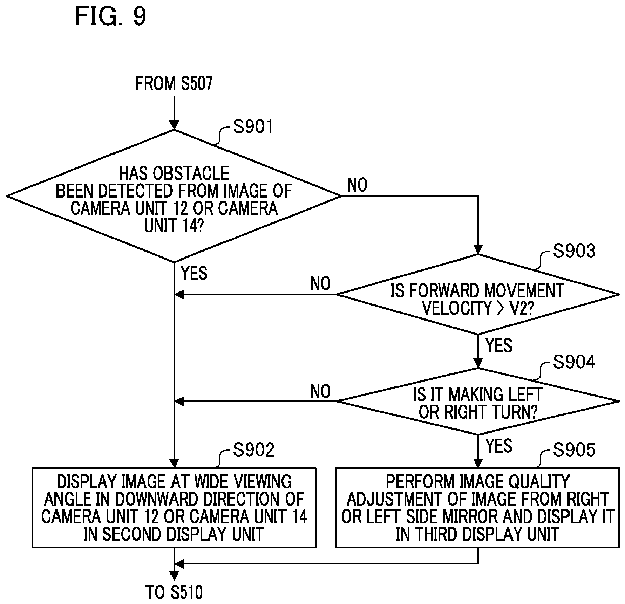

Fig. 9 is an explanatory flowchart of operation of Second Embodiment of the present invention. In Second Embodiment, display of the third display unit is controlled in accordance with the movement state (traveling state) of the vehicle (movable apparatus).

The flow of Fig. 9 is processed by the CPU 42 of the integrated processing unit 40 executing the computer program inside the memory 43 in response to a signal indicating the traveling state from the traveling control unit (ECU) 60.

Step S901 of Fig. 9 is processing performed after an image at a wide viewing angle is subjected to image quality adjustment and displayed in the first display unit in Step S507 of Fig. 5. In Step S901, it is discriminated whether an obstacle has been detected from the image of the camera unit 12 or the camera unit 14. For example, an obstacle is detected by the recognition units 32b and 34b.

If Yes in Step S901, the processing proceeds to Step S902, and if No, the processing proceeds to Step S903. In Step S902, the CPU 42 causes the second display unit 51, for example, to display an image at a wide viewing angle in the downward direction of the images from the camera unit in which an obstacle has been detected in the camera unit 12 and the camera unit 14.

The display unit at this time may be the third display unit. That is, an image at a wide viewing angle in the downward direction of the images from the camera unit 12 may be displayed in the third display unit 52 serving as an electronic side mirror on the right or the left when an obstacle is detected from the images of the camera units 12 and 14.

It is assumed that the foregoing image at a wide viewing angle in the downward direction is at the lower half of the viewing angle, for example, of the viewing angles of the camera units 12 and 14 directed in a substantially horizontal direction, for example. In addition, since the area around the center of the viewing angles of the camera units 12 and 14 has a low resolution and is distorted, display is performed after distortion correction. By displaying such an image, for example, it is easier to visually recognize obstacles present in blind spots on a side below the vehicle.

If No in Step S901, the processing proceeds to Step S903, and it is discriminated whether the forward movement velocity of the vehicle is lower than V2 (for example, 20 km/h). If No, the processing proceeds to Step S902, and the processing of Step S902 is performed. If Yes, the processing proceeds to Step S904.

In Step S904, it is discriminated whether an operation of a right turn or a left turn is performed. It is discriminated whether or not an operation of a right turn or a left turn is performed, for example, by a blinker operation, the direction of wheels, the rotation angle of the steering wheel, a signal from the traveling control ECU 60, or the like.

If an operation of a right turn or a left turn is discriminated in Step S904, the processing proceeds to Step S905. If No, the processing proceeds to Step S902 and performs the processing of Step S902.

In Step S905, an image at a viewing angle corresponding to an oblique rear side is cut out from the images obtained from the camera unit 12 on the right or the camera unit 14 on the left and is displayed in the third display unit 52 serving as an electronic side mirror. At this time, the image quality is adjusted through, for example, exposure control or image processing by a method similar to that in Step S509.

In this manner, in Step S905, the velocity is lower than V2, and during an operation of a right turn or a left turn, an image of the oblique rear side is displayed in the electronic side mirror on the right or the left. Therefore, for example, if a bicycle or a motorcycle is approaching from the oblique rear side, it can be visually recognized at once. After the processing of Step S905, the processing proceeds to Step S510.

As above, in Second Embodiment, an image with the image quality optimal for the third display unit 52 serving as an electronic side mirror can be displayed in accordance with the traveling state of the vehicle (movable apparatus).

In the foregoing embodiments, an example of using a plurality of camera units has been described, but the present invention is also effective in a system having only one camera unit.

In the embodiments described above, an example in which an image processing system is mounted in a movable apparatus such as a vehicle has been described. However, the movable apparatus in these embodiments is not limited to a vehicle such as an automobile, and any movable apparatus can be adopted if it is a movable device making movement, such as a train, a ship, an airplane, a robot, and a drone.

In addition, the image processing systems of the embodiments may be mounted or may not be mounted in the respective movable apparatuses thereof. In addition, for example, even if the movable apparatus is remotely controlled, the constitutions of these embodiments can be applied.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the image processing system through a network or various storage media. Then, a computer (or a CPU, an MPU, or the like) of the image processing system may be configured to read and execute the program. In such a case, the program and the storage medium storing the program configure the present invention.

In addition, the present invention includes those realized using at least one processor or circuit configured to function of the embodiments explained above, for example. Dispersion processing may be performed using a plurality of processors.

This application claims the benefit of Japanese Patent Application No. 2023-011341, filed on January 27, 2023, which is hereby incorporated by reference herein in its entirety.

An image processing system has an image acquisition unit configured to acquire an image signal generated by an image capturing unit capturing an optical image, a selection unit configured to select a part of a viewing angle range of the image signal, and a control unit configured to perform at least one of exposure control and image quality adjustment regarding an image based on the image signal depending on image quality of the viewing angle range selected by the selection unit.

**Claims**

1. An image processing system comprising:
   at least one processor or circuit configured to function as:

   an image acquisition unit configured to acquire an image signal generated by an image capturing unit capturing an optical image;
   a selection unit configured to select a part of a viewing angle range of the image signal; and
   a control unit configured to perform at least one of exposure control and image quality adjustment regarding an image based on the image signal depending on image quality of the viewing angle range selected by the selection unit.

2. The image processing system according to claim 1,

   wherein the image acquisition unit is installed in a movable apparatus, and

the selection unit selects the viewing angle range depending on a movement state of the movable apparatus.

3. The image processing system according to claim 1,
   wherein the selection unit has a UI receiving selection of a user.

4. The image processing system according to claim 1,

   further comprising a plurality of the image acquisition units configured to be disposed at different positions; and
   wherein the at least one processor or circuit is further configured to function as,
   a display signal generation unit configured to generate a composite image by composing the image signals acquired from the plurality of the image acquisition units.

5. The image processing system according to claim 1,
   wherein the image acquisition unit includes an optical system forming the optical image, and an image capturing element capturing the optical image formed by the optical system.

6. The image processing system according to claim 5,
   wherein the optical image has a high-resolution region and a low-resolution region.

7. The image processing system according to claim 6,
   wherein when a focal distance of the optical system is f, a half-viewing angle is $\theta$, an image height in an image plane is y, and a projective characteristic indicating a relationship between the image height y and the half-viewing angle $\theta$ is y($\theta$), y($\theta$) in the high-resolution region is larger than f$\times\theta$ and differs from the projective characteristic in the low-resolution region.

8. The image processing system according to claim 6,
   wherein the high-resolution region is configured to have a projective characteristic that approximates y=f$\times$tan$\theta$ or y=$\times\theta$.

9. The image processing system according to claim 6,
   wherein when $\theta$max is a maximum half-viewing angle of the optical system and A is a predetermined constant, the optical system satisfies,

   $$1<f\times\sin\theta max/y(\theta max)\leq A.$$

10. The image processing system according to claim 6,
    wherein when $\theta$max is a maximum half-viewing angle of the optical system and B is a predetermined constant, the optical system satisfies, 0.2<2$\times$f$\times$tan($\theta$max/2)/y($\theta$max)<B.

11. The image processing system according to claim 6,
    wherein when $\theta$max is a maximum half-viewing angle of the optical system and A and B are predetermined constants, the image processing system comprises the image acquisition unit configured to satisfy 1<f$\times$sin$\theta$max/y($\theta$max)<A and the image acquisition unit configured to satisfy 0.2<2$\times$f$\times$tan($\theta$max/2)/y($\theta$max)<B.

12. The image processing system according to claim 1,
    wherein the image quality adjustment includes at least one of white balance correction, gain adjustment, and gamma correction.

13. The image processing system according to claim 1,
    wherein the control unit performs at least one of the exposure control and the image quality adjustment regarding the image based the image signal to obtain image quality suitable for the viewing angle range selected by the selection unit.

14. The image processing system according to claim 2,
    wherein the selection unit selects a viewing angle range corresponding to at least one of an electronic rearview mirror and a back monitor installed in the movable apparatus.

**15.** The image processing system according to claim 2,
wherein the selection unit selects a viewing angle range corresponding to the back monitor if the movable apparatus moves rearward.

**16.** A movable apparatus having an image capturing unit mounted therein, the movable apparatus comprising:
at least one processor or circuit configured to function as:

an image acquisition unit configured to acquire an image signal generated by the image capturing unit capturing an optical image;
a selection unit configured to select a part of a viewing angle range of the image signal; and
a control unit configured to perform at least one of exposure control and image quality adjustment regarding an image based on the image signal depending on image quality of the viewing angle range selected by the selection unit,
wherein the selection unit is configured to select the viewing angle range depending on a movement state of the movable apparatus.

**17.** An image processing method comprising:

image acquiring of acquiring an image signal generated by an image capturing unit capturing an optical image;
selecting a part of a viewing angle range of the image signal; and
controlling of performing at least one of exposure control and image quality adjustment regarding an image based on the image signal depending on image quality of the viewing angle range selected through the selecting.

**18.** A non-transitory computer-readable storage medium configured to store a computer program comprising instructions for executing following processes:

image acquiring of acquiring an image signal generated by an image capturing unit capturing an optical image;
selecting a part of a viewing angle range of the image signal; and
controlling of performing at least one of exposure control and image quality adjustment regarding an image based on the image signal depending on image quality of the viewing angle range selected through the selecting.

## FIG. 1

FIG. 2A

FIG. 2B

EP 4 408 006 A1

FIG. 3

EP 4 408 006 A1

FIG. 4

FIG. 5

START

S500 — HAS MONITOR BEEN TOUCHED?
  - YES → S509 — PERFORM IMAGE QUALITY ADJUSTMENT OF VIEWING ANGLE RANGE DESIGNATED BY TOUCHING AND DISPLAY IT IN CORRESPONDING DISPLAY UNIT
  - NO → S501 — ACQUIRE VEHICLE CONTROL INFORMATION

S502 — IS IT MOVING FORWARD?
  - NO → S508 — PERFORM IMAGE QUALITY ADJUSTMENT OF IMAGE AT WIDE VIEWING ANGLE FOR REAR SIDE AND DISPLAY IT IN SECOND DISPLAY UNIT
  - YES → S503 — HAS OBSTACLE BEEN DETECTED OR IS IT MAKING COURSE CHANGE?
    - YES → S507 — PERFORM IMAGE QUALITY ADJUSTMENT OF IMAGE AT WIDE VIEWING ANGLE AND DISPLAY IT IN FIRST DISPLAY UNIT
    - NO → S504 — IS FORWARD MOVEMENT VELOCITY > V1?
      - YES → S506 — PERFORM IMAGE QUALITY ADJUSTMENT OF IMAGE AT NARROW VIEWING ANGLE AND DISPLAY IT IN FIRST DISPLAY UNIT
      - NO → S505 — PERFORM IMAGE QUALITY ADJUSTMENT OF IMAGE AT REFERENCE VIEWING ANGLE AND DISPLAY IT IN FIRST DISPLAY UNIT

S510 — IS THERE REQUEST OF ENDING?
  - NO → (return to START)
  - YES → END

FIG. 6

WHITE BALANCE CORRECTION 310 → DE-BAYER 311 → GAIN CORRECTION 312 → LOCA TONE MAPPING 313 → GAMMA CORRECTION 314

21 → ... → 40

IMAGE ANALYSIS UNIT 315

FROM 40

31a

EP 4 408 006 A1

## FIG. 7

```
        START DISPLAY PROCESSING
                    │
                    ▼
  DECIDE VIEWING ANGLE AND DISPLAY UNIT      ~S710
                    │
                    ▼
  ANALYZE IMAGE WITHIN CORRESPONDING VIEWING  ~S711
                 ANGLE
                    │
                    ▼
  DECIDE CONTROL METHOD FOR IMAGE CAPTURING   ~S712
      UNIT AND IMAGE PROCESSING UNIT
                    │
                    ▼
  CONTROL IMAGE QUALITY BY IMAGE CAPTURING    ~S713
      UNIT AND IMAGE PROCESSING UNIT
                    │
                    ▼
  DISPLAY IMAGE OF SET IMAGE IN CORRESPONDING ~S714
                DISPLAY UNIT
                    │
                    ▼
          END DISPLAY PROCESSING
```

## FIG. 8A

## FIG. 8B

# FIG. 9

FROM S507

S901

HAS OBSTACLE BEEN DETECTED FROM IMAGE OF CAMERA UNIT 12 OR CAMERA UNIT 14?

NO

YES

S903

IS FORWARD MOVEMENT VELOCITY > V2?

NO

YES

S904

IS IT MAKING LEFT OR RIGHT TURN?

NO

YES

S902

DISPLAY IMAGE AT WIDE VIEWING ANGLE IN DOWNWARD DIRECTION OF CAMERA UNIT 12 OR CAMERA UNIT 14 IN SECOND DISPLAY UNIT

S905

PERFORM IMAGE QUALITY ADJUSTMENT OF IMAGE FROM RIGHT OR LEFT SIDE MIRROR AND DISPLAY IT IN THIRD DISPLAY UNIT

TO S510

Europäisches
Patentamt

European
Patent Office

Office européen
des brevets

# EUROPEAN SEARCH REPORT

Application Number

EP 23 21 8606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 156 125 A1 (CANON KK [JP]) 29 March 2023 (2023-03-29) * paragraph [0013] - paragraph [0169] * | 1,2,4-9, 12-18 | INV. H04N23/63 H04N23/61 B60R1/00 |
| X | EP 3 451 651 A1 (SONY CORP [JP]) 6 March 2019 (2019-03-06) | 1-3,5,6, 12-18 | H04N23/60 H04N25/53 |
| Y | * paragraph [0030] - paragraph [0214] * | 5-11 | H04N23/69 H04N23/695 |
| X | JP 2018 007038 A (NIKON CORP) 11 January 2018 (2018-01-11) * paragraph [0006] - paragraph [0254] * | 1,2,5,6, 12-18 | H04N23/73 H04N23/80 G02B13/00 |
| X | US 2020/148114 A1 (GOSEBERG FRANK [DE] ET AL) 14 May 2020 (2020-05-14) | 1,2,4-6, 13-18 | |
| Y | * paragraph [0021] - paragraph [0047] * | 7-11 | |
| X | WO 2022/153795 A1 (SONY SEMICONDUCTOR SOLUTIONS CORP [JP]) 21 July 2022 (2022-07-21) * abstract * & US 2024/054656 A1 (HIGASHIBARA KIYOSHI [JP]) 15 February 2024 (2024-02-15) * paragraph [0040] - paragraph [0131] * | 1,2, 12-18 | |
| X | US 7 893 985 B1 (AHISKA YAVUZ [GB] ET AL) 22 February 2011 (2011-02-22) | 1,3,5,6, 12,13, 16,17 | |
| Y | * column 3, line 32 - column 6, line 32 * | 7-11 | |
| Y | WO 2023/276824 A1 (CANON KK [JP]) 5 January 2023 (2023-01-05) * abstract * & US 2024/111134 A1 (TAKAHASHI MAKOTO [JP]) 4 April 2024 (2024-04-04) * paragraph [0028] - paragraph [0124] * | 5-11 | |

TECHNICAL FIELDS SEARCHED (IPC)

H04N
B60R
G02B

The present search report has been drawn up for all claims

| Place of search | Date of completion of the search | Examiner |
|---|---|---|
| Munich | 8 May 2024 | Gil Zamorano, Gunnar |

## ANNEX TO THE EUROPEAN SEARCH REPORT
## ON EUROPEAN PATENT APPLICATION NO.

EP 23 21 8606

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2024

| Patent document cited in search report | | Publication date | Patent family member(s) | | Publication date |
|---|---|---|---|---|---|
| EP 4156125 | A1 | 29-03-2023 | CN | 115866418 A | 28-03-2023 |
| | | | EP | 4156125 A1 | 29-03-2023 |
| | | | JP | 7467402 B2 | 15-04-2024 |
| | | | JP | 2023046953 A | 05-04-2023 |
| | | | US | 2023113406 A1 | 13-04-2023 |
| EP 3451651 | A1 | 06-03-2019 | CN | 109076163 A | 21-12-2018 |
| | | | EP | 3451651 A1 | 06-03-2019 |
| | | | JP | 6795030 B2 | 02-12-2020 |
| | | | JP | WO2017187811 A1 | 07-03-2019 |
| | | | US | 2019124277 A1 | 25-04-2019 |
| | | | WO | 2017187811 A1 | 02-11-2017 |
| JP 2018007038 | A | 11-01-2018 | JP | 6668975 B2 | 18-03-2020 |
| | | | JP | 2018007038 A | 11-01-2018 |
| US 2020148114 | A1 | 14-05-2020 | US | 2016044284 A1 | 11-02-2016 |
| | | | US | 2020148114 A1 | 14-05-2020 |
| WO 2022153795 | A1 | 21-07-2022 | DE | 112021006799 T5 | 02-11-2023 |
| | | | JP | 2024038527 A | 21-03-2024 |
| | | | US | 2024054656 A1 | 15-02-2024 |
| | | | WO | 2022153795 A1 | 21-07-2022 |
| US 7893985 | B1 | 22-02-2011 | NONE | | |
| WO 2023276824 | A1 | 05-01-2023 | CN | 117561468 A | 13-02-2024 |
| | | | GB | 2622735 A | 27-03-2024 |
| | | | JP | WO2023276824 A1 | 05-01-2023 |
| | | | US | 2024111134 A1 | 04-04-2024 |
| | | | WO | 2023276824 A1 | 05-01-2023 |

EPO FORM P0459

For more details about this annex : see Official Journal of the European Patent Office, No. 12/82

**EP 4 408 006 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010095202 A
- JP 2004345554 A
- JP 2023011341 A